Europäisches Patentamt

European Patent Office

Office européen des brevets

(19)

(11) **EP 1 000 838 B1**

(12) **EUROPÄISCHE PATENTSCHRIFT**

(45) Veröffentlichungstag und Bekanntmachung des Hinweises auf die Patenterteilung:
**08.06.2005 Patentblatt 2005/23**

(51) Int Cl.$^7$: **B62D 6/04**, B60T 8/00

(21) Anmeldenummer: **99119543.9**

(22) Anmeldetag: **01.10.1999**

(54) **Verfahren zur Regelung der Querdynamik eines Fahrzeuges mit Vorderachs-Lenkung**

Method for controlling the lateral dynamics of a vehicle with front axle steering

Méthode pour le contrôle des dynamiques transversales d'un véhicule avec direction pour les roues avant

(84) Benannte Vertragsstaaten:
**DE ES FR GB IT**

(30) Priorität: **11.11.1998 DE 19851978**

(43) Veröffentlichungstag der Anmeldung:
**17.05.2000 Patentblatt 2000/20**

(73) Patentinhaber: **DaimlerChrysler AG**
**70567 Stuttgart (DE)**

(72) Erfinder:
• **Böttiger, Friedrich**
  **73733 Esslingen (DE)**
• **Suissa, Avshalom**
  **71272 Renningen (DE)**

(56) Entgegenhaltungen:
DE-A- 4 030 704      DE-A- 19 515 055
DE-A- 19 707 059     DE-A- 19 814 381
US-A- 5 455 770

EP 1 000 838 B1

**Beschreibung**

Die Erfindung betrifft ein Verfahren zur Regelung der Querdynamik eines Fahrzeuges mit Vorderachslenkung und den weiteren, im Oberbegriff des Patentanspruchs 1 genannten, gattungsbestimmenden Merkmalen.

Bei einem durch die DE 42 26 746 bekannten Verfahren dieser Art werden die Lenkwinkel der Vorderräder des Fahrzeuges fahrsituationsabhängig bestimmt, wobei diese Bestimmung unter Berücksichtigung sowohl der Giergeschwindigkeit $\dot\psi$ des Fahrzeuges als auch des Schwimmwinkels $\beta$ erfolgt. Zusätzlich zu einer Beeinflussung der Querdynamik des Fahrzeuges durch die Lenkwinkeleinsteuerung kann auch ein Bremseneingriff an einzelnen Fahrzeugrädern vorgenommen werden. Bei dem bekannten Verfahren wird sowohl das Gierverhalten des Fahrzeuges als auch der Schwimmwinkel zur Bestimmung der Stellgrößen Rad-Lenkwinkel und/oder Bremskraft herangezogen.

Bei dem bekannten Verfahren ist als nachteilig anzusehen, daß aufgrund einer permanenten Begrenzung des Schwimmwinkels und damit im Ergebnis auch des Schräglaufwinkels in zahlreichen Fahrsituationen die maximale Seitenführungskraft der Hinterräder des Fahrzeuges nicht ausnutzbar ist und dadurch Abweichungen der Bahnkurve des Fahrzeuges von der dem Fahrerwunsch entsprechenden Sollkurve auftreten, auch wenn noch keinerlei Schleudertendenz des Fahrzeuges gegeben ist und ein begrenztes Driften des Fahrzeuges - ein relativ hoher Schräglaufwinkel an der Hinterachse - zugelassen werden könnte.

Des weiteren ist durch die DE 43 25 413 A1 ein Verfahren zur Ermittelung des Schwimmwinkels bekannt und in Abhängigkeit von diesem die Querdynamik des Fahrzeuges durch Lenk- und Bremseneingriff so zu beeinflussen, daß ein Schleudern des Fahrzeuges weitgehend vermieden werden kann, jedoch hat es sich gezeigt, daß eine Querdynamik-Regelung allein in Abhängigkeit vom Schwimmwinkel nicht ausreichend ist, um in allen statistisch bedeutsamen Situationen ein Schleudern des Fahrzeuges zu vermeiden.

Aufgabe der Erfindung ist es daher, ein Verfahren der eingangs genannten Art anzugeben, das, unbeschadet weitgehender Freiheit hinsichtlich der Gestaltung der Fahrzeugreaktionen auf die Einsteuerung des Fahrerwunsches hinsichtlich des Bahnverlaufs des Fahrzeuges, mit hoher Zuverlässigkeit ein Schleudern des Fahrzeuges verhindert:

Diese Aufgabe wird, ausgehend von den gattungsgemäß zugrunde gelegten Verfahren durch die kennzeichnenden Merkmale des Patentanspruchs 1 dem Grundgedanken nach und in vorteilhaften Ausgestaltungen bzw. Durchführungsvarianten desselben durch die Merkmale der Unteransprüche 2 bis 6 gelöst.

Hiernach wird unter Verarbeitung von den Bewegungszustand des Fahrzeuges repräsentierenden Größen, insbesondere des vom Fahrer vorgegebenen Lenkwinkels $\delta$ und der Fahrzeuglängsgeschwindigkeit $v_x$ anhand eines linearisierten Fahrzeugmodells ein erster Sollwert $\dot\psi_{soll}(\delta,v_x)$ für die Giergeschwindigkeit $\dot\psi$ ermittelt, der dem durch Betätigung eines Steuerorgans (Lenkrad, Joystick oder dergleichen) eingesteuerten Fahrerwunsch bezüglich der Bahnbewegung des Fahrzeuges entspricht; des weiteren wird unter der Nebenbedingung, daß der Schwimmwinkel $\beta_h$ im Bereich der nicht gelenkten Hinterräder des Fahrzeuges einen begrenzten Wert nicht überschreiten soll, ein weiterer Sollwert $\dot\psi_{soll}(\beta_h; \alpha_h)$ ermittelt, und es wird der jeweils kleinere der beiden Sollwerte dem $\dot\psi$-Regler der Regelungseinrichtung als Sollwert-Eingabe zugeleitet, so daß die schwimmwinkel- bzw. schräglaufwinkel-abhängige Giergeschwindigkeitsregelung erst dann wirksam wird, wenn am Fahrzeug eine Schleudertendenz auftritt, die daran erkennbar ist, daß "unphysikalisch" hohe Istwerte der Giergeschwindigkeit bei gleichzeitig zu niedrigen Werten der FahrzeugQuerbeschleunigung auftreten. Im übrigen, d.h. solange eine Schleudertendenz nicht gegeben ist, kann die Querdynamik-Regelung anhand der $\dot\psi$-Sollwert-Ausgabe des Fahrzeugmodells mit im Prinzip beliebiger, einem erwünschten Fahrverhalten des Fahrzeuges entsprechender Charakteristik, z.B. "leicht" übersteuerndem oder untersteuerndem oder neutralem Fahrverhalten, erfolgen.

Der gemäß Anspruch 2 vorgesehenen Art der Sollwertbildung für den den Schwimmwinkel begrenzenden Regelungsmodus der Regelungseinrichtung entspricht in bevorzugter Durchführungsart das Verfahren gemäß Anspruch 3 gleichsam eine Entkopplung der Schwimmwinkel-Dynamik an der Hinterachse von derjenigen an der Vorderachse, dies jedenfalls dann, wenn das Trägheitsmoment $J_z$ des Fahrzeuges um seine Hochachse in guter Näherung dem Wert $J_z = m \cdot l_v \cdot l_h$ entspricht, und es wird eine auf besonders einfache Weise implementierbare Art des ein Schleudern des Fahrzeuges verhindernden Regelungsmodus erzielt.

Der Schwimm- bzw. Schräglaufwinkel-Grenzwert, der im schleuder-verhindernden Regelungsmodus nicht überschritten werden darf, kann als Festwert vorgegeben werden und wird dann zweckmäßigerweise gleich demjenigen Wert gewählt, bei dem größtmögliche Seitenführungskraft-Übertragungsfähigkeit der Fahrzeughinterräder gegeben ist.

Zur Berücksichtigung insbesondere des Fahrbahnzustandes kann es auch zweckmäßig sein, den Schwimmwinkel-GrenzWert aus geschätzten Werten $\hat v_x$ und $\hat\mu$ der Fahrzeuggeschwindigkeit und $v_x$ und des Kraftschlußbeiwertes $\mu$ zu ermitteln.

Zur Bestimmung des für die Regelung erforderlichen Ist -Wertes des Schwimmwinkels $\beta_h$ sind Schätzwerte $\hat v_y$ und $\hat v_x$ der Fahrzeug-Quergeschwindigkeit $v_y$ und der Fahrzeug-Längsgeschwindigkeit $v_x$ geeignet, die z.B. als Ausgaben eines Kalman-Filters, wie aus der DE 43 25 413 A1 bekannt, gewinnbar sind, sowie Meßwerte der Fahrzeug-Giergeschwindigkeit.

Das erfidungsgemäße Verfahren wird nachfolgend anhand der Funktionsbeschreibung einer in der Zeichnung dargestellten Querdynamik-Regelungseinrichtung näher erläutert. Es zeigen:

Fig. 1 ein schematisch vereinfachtes Blockschaltbild einer nach dem erfindungsgemäßen Verfahren betreibbaren Einrichtung zur Regelung der Querdynamik eines Straßenfahrzeuges mit Vorderachs-Lenkung,

Fig. 2 eine Einspur-Modelldarstellung eines Fahrzeuges zu einer vereinfachenden Erläuterung seines Querdynamik-Verhaltens und

Fig. 3 ein Diagramm zur qualitativen Erläuterung der Sollwert-Vorgabe für den Schwimmwinkel-Begrenzungsmodus der Regelungseinrichtung gemäß Fig. 1.

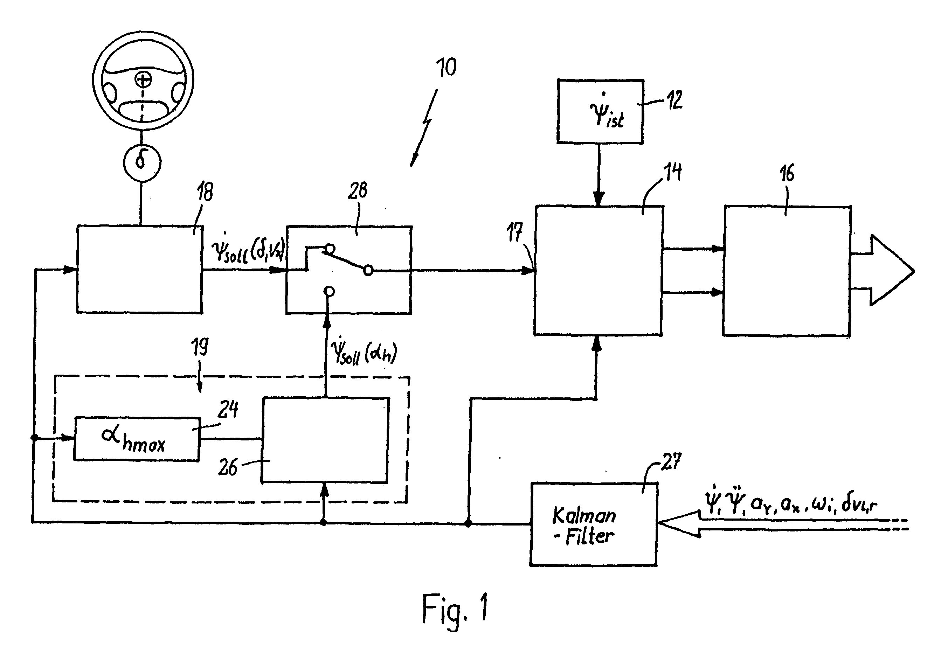

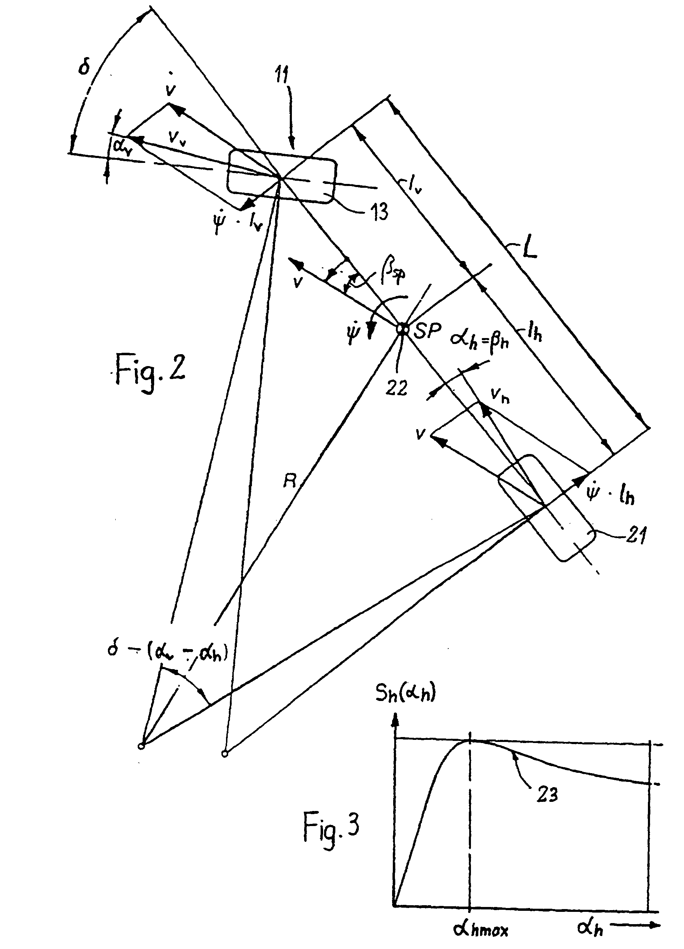

Zweck der in der Fig. 1 insgesamt mit 10 bezeichneten Giergeschwindigkeits($\dot{\psi}$)-Regelungseinrichtung eines in der Fig. 2 durch ein Einspur-Modell repräsentierten Straßenfahrzeuges 11 ist, ein Schleudern desselben in einer Kurvenfahrt zu vermeiden.

Die Regelungseinrichtung 10 ist dahingehend ausgelegt, daß durch eine Regelung der mittels eines Giergeschwindigkeits-Sensors 12 fortlaufend meßbaren Giergeschwindigkeit $\dot{\psi}$ auch eine Begrenzung des bei einer Kurvenfahrt an den nicht gelenkten Fahrzeugrädern auftretenden Schräglaufwinkels $\alpha_h$ auf einen mit dynamischer Stabilität des Fahrzeugs 11 verträglichen Wert erzielbar ist.

Bei dieser Art der Regelung wird der dynamischen Stabilität - Unterdrückung des Schleuderns - des Fahrzeuges gleichsam Priorität vor einer weitestmöglichen Angleichung der Fahrzeugbewegung an den Fahrerwunsch gegeben, mit der Folge, daß das Fahrzeug, wenn die Regelung aktiv ist, zwar nicht mehr "exakt" dem Fahrerwunsch folgt, den dieser mittels eines üblicherweise als Lenkrad ausgebildeten Steuerelements einsteuert, sondern nur noch angenähert, dafür jedoch dynamisch stabil und damit für den Fahrer in gleichsam gewohnter Weise beherrschbar bleibt.

Für das Fahrzeug 11 ist, zum Zweck der Erläuterung, vorausgesetzt, daß es eine Vorderachs-Lenkung hat, und daß die Hinterräder des Fahrzeuges nicht gelenkt sind.

Des weiteren ist vorausgesetzt, daß das Fahrzeug 11 mit einer elektrisch gesteuerten SbW(Steer by Wire)-Lenkung ausgerüstet ist, bei der den beiden lenkbaren Vorderrädern des Fahrzeuges 11, die in dem Einspur-Modell der Fig. 2 lediglich durch ein Vorderrad 13 repräsentiert sind, einzeln zugeordnete, nicht dargestellte, elektrisch ansteuerbare Lenkwinkel-Stellorgane vorgesehen sind, mittels derer nach Maßgabe von Lenkwinkel-Sollwert-Signalen eines Giergeschwindigkeits-Reglers 14 der Regelungseinrichtung 10 die bei einer Kurvenfahrt erforderlichen Lenkwinkel $\delta_{vl}$ und $\delta_{vr}$ des linken und des rechten Vorderrades des Fahrzeuges 11 einstellbar sind. Als Stellglieder einer insgesamt mit 16 bezeichneten Querdynamik-Steuereinheit des Fahrzeuges 11, mittels derer die Giergeschwindigkeit $\dot{\psi}$ des Fahrzeuges 11 eingestellt wird, sind auch dessen nicht dargestellte Radbremsen ausgenutzt, die, angesteuert durch Sollwert-Ausgangssignale des $\dot{\psi}$-Reglers 14, einzeln oder zu mehreren selbsttätig zur Entfaltung definierter Radbremskräfte aktivierbar und dadurch ebenfalls zur Beeinflussung des Gier-Verhaltens des Fahrzeuges ausnutzbar sind.

Je nach der Fahrsituation erfolgt die Einstellung der Giergeschwindigkeit $\dot{\psi}$ entweder durch Aktivierung der Lenkwinkel-Stellorgane allein oder durch eine kombinierte Aktivierung der Lenkwinkel-Stellorgane und einer oder mehrerer der Radbremsen des Fahrzeuges und kann unter bestimmten "extremen" Bedingungen auch allein durch Ansteuerung einer oder mehrerer Radbremsen des Fahrzeuges 11 erfolgen.

Zur Generierung von $\dot{\psi}$-Sollwert-Signalen, die dem Sollwert-Signaleingang 17 des $\dot{\psi}$-Reglers 14 zuführbar sind, ist ein durch einen elektronischen Rechner implementiertes, lineares Fahrzeug-Referenzmodell 18, das ein beliebiges "Wunsch"-Fahrzeug repräsentieren kann, vorgesehen, das anhand der den Fahrerwunsch repräsentierenden Lenkwinkeleingabe und modellspezifischer Parameter, die eine realistische Übertragungsfunktion ergeben, sowie geschätzter oder gemessener Werte der Fahrzeuglängsgeschwindigkeit Sollwerte der Giergeschwindigkei t $\dot{\psi}_{soll}(\delta, v_x)$ ermittelt, aus deren Vergleich mit dem gemessenen Wert der Giergeschwindigkeit der $\dot{\psi}$-Regler 14 die Ansteuer-Signale für die Lenkwinkel-Stellorgane und/oder die Bremsen-Aktuatoren der Querdynamik-Steuereinheit 16 erzeugt.

Die $\dot{\psi}$-Regelungseinrichtung 10 umfaßt weiter einen insgesamt mit 19 bezeichneten Schwimmwinkel($\beta_h$)- bzw. Schräglaufwinkel($\alpha_h$)-Regler, dessen Zweck es ist, im Falle einer Schleudertendenz des Fahrzeuges den Schwimmwinkel $\beta_h$ im Bereich der hinteren - nicht gelenkten - Fahrzeugräder 21 auf einen mit dynamischer Stabilität im Sinne schleuderfreien Fahrens verträglichen Wert zu begrenzen, wobei, wenn die Regelungseinrichtung 10 in diesem Betriebsmodus arbeitet, der Begrenzung des Schwimmwinkels $\beta_h$ bzw. des Schräglaufwinkels $\alpha_h$ die Priorität vor einer Änderung der Giergeschwindigkeit des Fahrzeuges durch Vergrößerung des Schräglaufwinkels $\alpha_v$ an den gelenkten Vorderrädern 13 des Fahrzeuges 11 eingeräumt ist.

Zur Erläuterung der Konzeption dieses Schwimmwinkel-Reglers 19 sei zunächst anhand des linearisierten Einspurmodells gemäß Fig. 2 auf die das Gierverhalten des Fahrzeuges 11 beschreibenden Bewegungsgleichungen eingegangen, die durch die folgenden Differentialgleichungen:

$$J_z \cdot \ddot{\psi} = S_v \cdot l_v - l_h \cdot S_h \qquad\qquad (1),$$

die sich aus der Forderung der Ausgeglichenheit der Momente um die durch den Schwerpunkt (SP) gehende Hochachse 22 ergibt, sowie

$$m \cdot \dot{v}_y = S_v + S_h - m \cdot v_x \cdot \dot{\psi} \qquad\qquad (2),$$

die sich aus der Forderung nach Ausgeglichenheit der Querkräfte am Fahrzeug ergibt, gegeben sind.

In dem für die Bewegungsgleichungen (1) und (2) vorausgesetzten fahrzeugfesten Koordinatensystem, in dem mit "x" die Fahrzeuglängsrichtung und mit "y" die dazu rechtwinklige Querrichtung indiziert sind, ist der Schwimmwinkel $\beta_{SP}$ im Schwerpunkt des Fahrzeuges durch die linearisierte Beziehung

$$\beta_{SP} = -\frac{v_y}{v_x}$$

gegeben.

In entsprechend linearisierter Betrachtung gilt für den Schwimmwinkel $\beta_{sh}$ in einem Punkt hinter dem Schwerpunkt, d.h. einem Punkt, der zwischen dem Schwerpunkt und der Hinterachse oder jenseits derselben liegt und vom Schwerpunkt SP den Abstand $l_{sh}$ hat, die Beziehung

$$\beta_{sh} = -\frac{v_y}{v_x} + \frac{\dot{\psi} \cdot l_{sh}}{v_x}$$

und demgemäß für den Schwimmwinkel $\beta_h$ an der Hinterachse, wo der Schwimmwinkel gemäß dem Einspurmodell der Fig. 2 gleich dem Schräglaufwinkel $\alpha_h$ ist, die Beziehung

$$\beta_h = -\frac{v_y}{v_x} + \frac{\dot{\psi} \cdot l_h}{v_x}$$

in der mit $l_h$ der Abstand der Hinterachse vom Fahrzeugschwerpunkt bezeichnet ist.

Durch zeitliche Differantiation dieser Beziehung folgt unter der Bedingung, daß die Fahrzeuglängsgeschwindigkeit $v_x$ konstant ist, die Beziehung:

$$\dot{\beta}_h = -\frac{\dot{v}_y}{v_x} + \frac{\ddot{\psi} \cdot l_h}{v_x} \qquad\qquad (3)$$

Hieraus ergibt sich mit $\dot{v}_y$ aus der Beziehung (2) und $\ddot{\psi}$ aus der Beziehung (1) für die zeitliche Änderung $\dot{\beta}_h$ des Schwimmwinkels $\beta_h$ an der Hinterachse die folgende Beziehung:

$$\dot{\beta}_h = S_v \left[ \frac{l_v \cdot l_h}{v_x \cdot J_z} - \frac{1}{m \cdot v_x} \right] - S_h \left[ \frac{l_h^2}{v_x \cdot J_z} + \frac{1}{m \cdot v_x} \right] + \dot{\psi}$$

$$(4).$$

Unter der Bedingung, daß das Trägheitsmoment $J_z$ des Fahrzeuges 11 um seine Hochachse 22 der Beziehung

$$J_z \cong m \cdot l_v \cdot l_h$$

genügt, die z.B. bei Personenkraftwagen meist in sehr guter Näherung erfüllt ist oder leicht erfüllbar ist, ergibt sich aus der Beziehung (4), für die Schwimmwinkeländerung $\dot{\beta}_h$ die Beziehung

$$\dot{\beta}_h = \dot{\psi} - \frac{S_h \cdot (l_v + l_h)}{l_v \cdot m \cdot v_x} = \dot{\psi} - \frac{S_h \cdot L}{l_v \cdot m \cdot v_x} \tag{5}$$

Aus dieser Beziehung ist ersichtlich, daß für

$$\dot{\psi} = \frac{S_h \cdot L}{l_v \cdot m \cdot v_x}$$

die zeitliche Änderung $\dot{\beta}_h$ bzw. $\dot{\alpha}_h$ des Schwimmwinkels $\beta_b$ an den Hinterrädern 21 bzw. des mit diesem identischen Schräglaufwinkels $\alpha_h$ verschwindet ($\dot{\alpha}_h=0$), d.h. der Schwimmwinkel bzw. der Schräglaufwinkel konstant wird.

Dies wird zu einer Begrenzungsregelung des Schräglaufwinkels $\alpha_h$ durch Regelung der Giergeschwindigkeit $\dot{\psi}$ in der Weise genutzt, daß der Schwimmwinkel-Regler 19 Sollwerte $\dot{\psi}_{soll}(\alpha_h)$ für die Giergeschwindigkeits ($\dot{\psi}$)-Regelung gemäß dem Regelungsansatz:

$$\dot{\psi}_{soll}(\alpha_h) = \frac{L \cdot S_n(\alpha_h)}{l_v \cdot m \cdot v_x} - \lambda\,(\alpha_h - \alpha_{hsoll}) \tag{6}$$

generiert, die dem Sollwert-Eingang 17 des $\dot{\psi}$-Reglers 14 zuführbar sind, wobei mit $\lambda$ ein frei wählbarer Verstärkungsfaktor bezeichnet ist.

Die durch die $\dot{\psi}$-Regelungseinrichtung 10 insgesamt repräsentierte Regelstrecke hat eine Kaskade-Struktur mit der Giergeschwindigkeit $\dot{\psi}$ als Stellgröße, wobei durch den Regleransatz gemäß der Beziehung (6) eine Linearisierung der Querbewegung erzielt wird, gemäß der Beziehung

$$\dot{\alpha}_h = -\lambda(\alpha_b - \alpha_{hsoll})$$

die sich unmittelbar aus einem Vergleich der Beziehungen (5) und (6) für den Fall, daß $\dot{\psi} = \dot{\psi}_{soll}(\alpha_h)$ ist, ergibt.

Die in den Beziehungen (1), (2), (4), sowie (5) und (6) auftretenden Seitenkräfte sind in dem linearisierten Einspurmodell des Fahrzeuges 11 durch die Beziehungen:

$$S_v = \frac{l_h \cdot m \cdot a_y + J_z \cdot \ddot{\psi}}{l_v + l_h} \tag{8}$$

und

$$S_h = \frac{l_v \cdot m \cdot a_y - J_z \cdot \ddot{\psi}}{l_v + l_h} \tag{9}$$

gegeben.

Den Seitenkräften gemäß den Beziehungen (8) und (9) entsprechen "Reifen"-Seitenkräfte, die in Abhängigkeit vom Schräglaufwinkel $\alpha_{v,h}$ durch eine Beziehung der Form

$$S_{v,h} = C_{v,h} \cdot \alpha_{v,h}$$

angebbar sind, in der mit $c_{v,h}$ reifencharakteristische Schräglaufsteifigkeiten bezeichnet sind.

Der Verlaufskurve 23 der Fig. 3, die eine typische Form der Abhängigkeit der Seitenkräfte vom Schräglaufwinkel repräsentiert, ist unmittelbar entnehmbar, daß durch dessen Vergrößerung ein Anwachsen der Seitenkräfte nur bis zu einem Maximalwert $\alpha_{max}$ des Schräglaufwinkels möglich ist.

Demgemäß ist der Schräglaufwinkel- bzw. Schwimmwinkel-regler 19 dahingehend ausgelegt, daß der Schräglaufwinkel $\alpha_h$ einen Wert $\alpha_{hbegr}$ nicht überschreiten kann und dieser als Sollwert für die Regelung gemäß der Beziehung (6) gewählt.

Der Wert $\alpha_{hbegr}$ kann fest vorgegeben sein, z.B. auf einen Wert um 10°, der etwa dem Wert $\alpha_{hmax}$ entspricht, der die obere Grenze des Schräglaufwinkels markiert, bis zu der durch Lenkwinkel- bzw. Schräglaufwinkelvergrößerung eine Steigerung der Seitenkräfte möglich ist, oder, wie in der Fig. 1 durch einen Grenzwertgeber 24 schematisch dargestellt, variabel vorgebbar sein, dessen Ausgabe als Sollwert-Eingabe einem $\dot{\psi}_{soll}(\alpha_h)$-Generator 26 zugeleitet ist, der die $\dot{\psi}_{soll}$-Wertausgaben für den $\dot{\psi}$-Regler 14 erzeugt, die über die $\dot{\psi}$-Regelung die Schräglaufwinkel-Regelung vermitteln.

Eine zweckmäßige Art der Vorgabe des Grenzwertes $\alpha_{hbegr}$ besteht darin, daß dieser Grenzwert gemäß einer Beziehung

$$\alpha_{hbegr} = a_{h\,max} \cdot \mu + \alpha_{h0} \tag{11}$$

gebildet wird, in der $a_{hmax}$ und $\alpha_{h0}$ konstante Parameter sind und $\mu$ den in der jeweiligen Kurvenfahrt-Situation genutzten Kraftschluß-Beiwert bezeichnet, der in Abhängigkeit von der Fahrbahnbeschaffenheit und von Witterungsbedingungen deutlich variieren kann. Eine zweckmäßiger Wahl der festen Parameter $a_{hmax}$ und $\alpha_{h0}$ in Relation zu dem oberen Grenzwert $\alpha_{hmax}$ des Schräglaufwinkels besteht darin, daß, wenn das Verhältnis $\alpha_{hmax}/\alpha_{h0}$ einen Wert q (q < 1) hat, für den Parameter $a_{hmax}$ der Wert (q - 1) $\alpha_{h0}$ gewählt wird, so daß sich bei einem typischen Maximalbetrag des Kraftschlußbeiwertes $\mu$ um 1 der Wert $\alpha_{hmax}$ als Sollwert für die Schräglaufwinkel-Regelung ergibt.

Die zur Generierung der für die Schräglaufwinkel-Begrenzung geeigneten $\dot{\psi}_{soll}$-Werte gemäß der Beziehung (6) erforderliche Seitenkraft $S_h(\alpha_h)$ wird gemäß der Beziehung (9) aus gemessenen oder geschätzten Werten der Querbeschleunigung ay und der Gierwinkelbeschleunigung $\ddot{\psi}$ ermittelt, wobei unterstellt wird, daß die Fahrzeugmasse m, der Abstand $l_v$ des Schwerpunktes SP von der Vorderachse, der Radstand $L = l_v + l_h$ und das Gier-Trägheitsmoment $J_z$ als fahrzeugspezifische Größen konstant sind.

Die Fahrzeuglängsgeschwindigkeit $v_x$ wird aus gemessenen Werten der Raddrehzahlen $\omega_i$ der Fahrzeugräder als Schätzwert ermittelt.

Der Ist-Wert $\alpha_h$ des Schräglaufwinkels an der Hinterachse wird gemäß der linearisierten Beziehung

$$\alpha_h = -\frac{v_y}{v_x} + \frac{\dot{\psi} \cdot l_h}{v_x}$$

anhand geschätzter Werte der Fahrzeuglängsgeschwindigkeit $v_x$ und der Fahrzeugquergeschwindigkeit $v_y$ sowie des gemessenen Wertes $\dot{\psi}$ der Giergeschwindigkeit ermittelt. Ein diesbezüglich geeigneter Schätzwertgeber 27, der aus einer Verarbeitung von Meßwerten für die Giergeschwindigkeit $\dot{\psi}$, die Gierbeschleunigung $\ddot{\psi}$, die Fahrzeugquerbe-schleunigung $\alpha_y$, die Fahrzeuglängsbeschleunigung $\alpha_x$, die Raddrehzahlen $\omega_i$ und die Vorderrad-Lenkwinkel $\delta_v$, die von dem $\dot{\psi}$-Regler 14 bzw. vom $\alpha_h$-Regler 26 zu verarbeitenden Schätzwerte $v_x,v_y$, sowie einen Schätzwert $\mu$ für den Kraftschlußbeiwert generiert, die als Eingaben dem Grenzwert-Geber 24 zugeleitet sind, sowie gegebenenfalls eine $a_y$-Ausgabe für den $\alpha_h$-Regler generiert, kann in der Art eines Kalman-Filters ausgebildet sein, wie z.B. in der DE 43 25 413 A1, auf die hiermit ausdrücklich Bezug genommen sei, für die Bestimmung des Schwimmwinkels eines Fahrzeuges im Detail näher erläutert.

Schätzwerte $\mu$ des Kraftschlußbeiwertes können dadurch ermittelt werden, daß die Beträge der Seitenkräfte gemäß den Beziehungen (8) und (9) durch die jeweils gegebenen Normalkräfte $F_z$ an der Vorderachse und der Hinterachse dividiert werden, die ihrerseits aus dem Fahrzeuggewicht und der Achs- bzw. Radlastverteilung schätzbar sind. Ein Schätzwert $v_y$ der Quergeschwindigkeit kann durch eine Integration der Querbeschleunigung $a_y$ über die Zeitspanne $\Delta t$ gewonnen werden, die bei einer Einsteuerung einer Kurvenfahrt verstreicht, bis die Querbeschleunigung $a_y$ konstant geworden ist.

Damit der zur Begrenzung des Schräglaufwinkels $\alpha_h$ über eine Begrenzung der Giergeschwindigkeit $\dot{\psi}$ vor-

gesehene Regelungsmodus, der unter extremen Bedingungen zu einer signifikanten Abweichung der Fahrzeug-Bewegungsbahn vom Fahrerwunsch führen kann, nur dann wirksam wird, wenn eine Schleudertendenz des Fahrzeugs gegeben ist, ist bei dem durch die Regelungseinrichtung 10 implementierten Regelungskonzept vorgesehen, daß der genannte Regelungsmodus nur dann gewählt wird, wenn der durch die Schräglaufwinkel-Regelung gemäß der Beziehung (5) bedingte $\dot{\psi}_{soll}(\alpha_b)$-Wert kleiner als der vom Fahrzeug-Referenzmodell 18 ausgegebene $\dot{\psi}(\delta,v_x)$-Wert ist, der in Abhängigkeit vom Lenkwinkel δ und des Schätzwertes $v_x$ der Fahrzeuglängsgeschwindigkeit als variablen Größen bestimmt wird.

Demgemäß ist eine Umschalt-Einrichtung 28 vorgesehen, die die Sollwert-Ausgaben des Fahrzeug-Referenzmodells 18 und diejenigen des $\alpha_h$-Reglers 19 entsprechend der genannten Umschaltstrategie, daß der dem Betrag nach jeweils kleinere der beiden Soll-Werte für die $\dot{\psi}$-Regelung maßgeblich sein soll, alternativ dem Sollwert-Eingang 17 des $\dot{\psi}$-Reglers 14 zuleitet.

Dadurch wird erreicht, daß das Fahrzeug in der überwiegenden Anzahl der statistisch bedeutsamen Kurvenfahrt-Situationen im wesentlichen über den Lenkungs-Eingriff gesteuert wird und sich somit auch weitestgehend dem Fahrerwunsch entsprechend verhält und die zu einem Abweichen der Bewegungsbahn des Fahrzeuges vom Fahrerwunsch führende Schräglaufwinkel-bzw. Schwimmwinkel-Begrenzungsregelung nur in den extremen, "gefährlichen" Bedarfssituationen wirksam wird.

**Patentansprüche**

1.  Verfahren zur Regelung der Querdynamik eines Fahrzeuges mit Vorderachs-Lenkung, wobei die Regelung in Abhängigkeit von Abweichungen gemessener Ist-Werte der Giergeschwindigkeit von fortlaufend generierten Soll-Werten derselben und die Nachführung der Ist-Werte durch Einstellung von Radlenkwinkeln ($\delta_i$) und/oder Einstellung von Radbremskräften ($P_i$) erfolgt, wobei anhand eines linearen Fahrzeugmodells, das ein dynamisches Wunsch-Verhalten repräsentiert, ein erster Sollwert $\dot{\psi}_{soll}(\delta, v_x)$ für die Giergeschwindigkeit $\dot{\psi}$ ermittelt wird, der dem durch Betätigung eines Steuerorgans eingesteuerten Fahrerwunsch bezüglich der Bahnbewegung des Fahrzeuges entspricht, **dadurch gekennzeichnet, daß** unter der Nebenbedingung, daß der Schwimmwinkel $\beta_h$ im Bereich der nicht gelenkten Hinterräder des Fahrzeuges und/oder den an den mehr gelenkten Hinterrädern des Fahrzeuges auftretende Schräglaufwinkel $\alpha_h$ einen begrenzten Wert nicht überschreiten soll, ein weiterer Sollwert $\dot{\psi}_{soll}(\beta)$ ermittelt wird, und daß der dem Betrage nach kleinere dieser beiden Soll-Werte als der für die Regelung maßgebliche Sollwert der Giergeschwindigkeit genutzt wird.

2.  Verfahren nach Anspruch 1, **dadurch gekennzeichnet, daß** der weitere Sollwert $\dot{\psi}_{soll}(\beta)$ gemäß der Beziehung

$$\dot{\psi}_{soll}(\beta) = \frac{K \cdot a_{ysh}}{V_x} - \lambda \cdot (\beta_{sh} - \beta_{sh\,max})$$

gebildet wird, in der mit $\beta_{sh}$ der Schwimmwinkel in einem in signifikantem Abstand vom Schwerpunkt im hinteren Bereich des Fahrzeuges liegenden Punkt, mit $a_{ysn}$ die Querbeschleunigung in diesem Punkt mit K eine fahrzeugspezifische Konstante und mit λ ein wählbarer Verstärkungsfaktor bezeichnet sind.

3.  Verfahren nach Anspruch 2, **dadurch gekennzeichnet, daß**, für den Fall, daß das Gier-Trägheitsmoment $J_z$ mindestens in guter Näherung durch die Beziehung

$$J_z = I_h \cdot I_v \cdot m$$

gegeben ist, in der mit m die Fahrzeugmasse, mit $I_v$ der Abstand des Schwerpunktes des Fahrzeuges von der Vorderachse und mit $I_h$ der Abstand des Schwerpunktes von der Hinterachse bezeichnet sind, der weitere, für die Giergeschwindigkeits-Begrenzungsregelung benötigte Sollwert gemäß der Beziehung

$$\dot{\psi}_{soll}(\alpha_h) = \frac{L \cdot S_h(\alpha_h)}{I_v \cdot V_x \cdot m} - \lambda \cdot (\alpha_h - \alpha_{h\,max})$$

bestimmt wird, in der mit L der Achsabstand des Fahrzeuges und mit $S_h(\alpha_h)$ die bei einer Kurvenfahrt an der Hinterachse des Fahrzeuges auftretende Seitenkraft bezeichnet sind.

**4.** Verfahren nach einem der Ansprüche 1 bis 3, **dadurch gekennzeichnet, daß** der Schwimmwinkel-Grenzwert $\beta_{hmax}$ bzw. der Schräglaufwinkel-Grenzwert $\alpha_{hmax}$ fest vorgegeben wird, vorzugsweise mit einem Wert um 10°.

**5.** Verfahren nach einem der Ansprüche 1 bis 4, **dadurch gekennzeichnet, daß** der Schwimmwinkel-Grenzwert $\beta_{hmax}$ und/oder der Schräglaufwinkel-Grenzwert $\alpha_{hmax}$ unter Berücksichtigung geschätzter Werte $\hat{v}_x$ sowie $\hat{\mu}$ der Fahrzeuglängsgeschwindigkeit $v_x$ und des Kraftschlußbeiwertes $\mu$ ermittelt wird.

**6.** Verfahren nach einem der Ansprüche 1 bis 3, **dadurch gekennzeichnet, daß** der Ist-Wert des Schwimmwinkels $\beta_h$ aus geschätzten Werten $\hat{v}_y$, $\hat{v}_x$ der Fahrzeug-Quergeschwindigkeit $(v_y)$ und der FahrzeugLängsgeschwindigkeit $(v_x)$ ermittelt wird.

## Claims

**1.** Method for controlling the transverse dynamics of a vehicle with front-axle steering, in which the control takes place as a function of the deviations of measured actual values of the yaw rate from continuously generated nominal values thereof and by reacting to the said actual values by adjusting wheel steering angles ($\delta_i$) and/or adjusting wheel braking forces ($P_i$), such that with reference to a linear vehicle model which represents a desired dynamical behaviour, a first nominal value $\dot{\psi}_{soll}$ ($\delta$, $v_x$) for the yaw rate $\dot{\psi}$ is determined, which corresponds to the driver's desired vehicle path, as specified by the actuation of a control element, **characterised in that** subject to the secondary condition that the lateral drift angle $\beta_h$ in the area of the non-steered rear wheels of the vehicle and/or the side-slip angle $\alpha_h$ occurring at the non-steered rear wheels of the vehicle must not exceed a limited value, another nominal value $\dot{\psi}_{soll}$ ($\beta$) is determined, and that the smaller of these two nominal values of the yaw rate is used as the decisive one for control purposes.

**2.** Method according to Claim 1, **characterised in that** the said other nominal value $\dot{\psi}_{soll}$ ($\beta$) is determined from the relation:

$$\dot{\psi}_{soll}(\beta) = \frac{K \cdot a_{ysh}}{v_x} - \lambda \cdot (\beta_{sh} - \beta_{sh\,max})$$

in which $\beta_{sh}$ is the lateral drift angle at a point located in the rear area of the vehicle a significant distance from the centre of gravity, $a_{ysh}$ is the transverse acceleration at the said point, K is a vehicle-specific constant and $\lambda$ is an amplification factor which can be chosen.

**3.** Method according to Claim 2, **characterised in that** in the case when the yaw moment of inertia $J_z$ is given, at least to a good approximation, by the relation:

$$J_z = l_h \cdot l_v \cdot m$$

in which m is the mass of the vehicle, $l_v$ is the distance of the vehicle's centre of gravity from the front axle and $l_h$ is the distance of the centre of gravity from the rear axle, the said other nominal value required for the limiting control of the yaw rate is determined in accordance with the relation:

$$\dot{\psi}_{soll}(\alpha_h) = \frac{L \cdot S_h(\alpha_h)}{l_v \cdot V_x \cdot m} - \lambda \cdot (\alpha_h - \alpha_{h\,max})$$

in which L is the axle separation of the vehicle and $S_h$ ($\alpha_h$) is the lateral force acting on the vehicle's rear axle when driving round a curve.

**4.** Method according to any of Claims 1 to 3, **characterised in that** the limiting lateral drift angle $\beta_{hmax}$ and the limiting side-slip angle $\alpha_{hmax}$ have specified fixed values, preferably of approximately 10°.

**5.** Method according to any of Claims 1 to 4, **characterised in that** the limiting lateral drift angle $\beta_{hmax}$ and/or the limiting side-slip angle $\alpha_{hmax}$ is/are determined having regard to estimated values $\hat{v}_x$ and $\hat{\mu}$ of the vehicle's longi-

tudinal speed $v_x$ and the friction coefficient $\mu$.

6. Method according to any of Claims 1 to 3, **characterised in that** the actual value of the lateral drift angle $\beta_h$ is determined from estimated values $\hat{v}_y$, $\hat{v}_x$ of the transverse speed ($v_y$) and the longitudinal speed ($v_x$) of the vehicle.

## Revendications

1. Procédé de régulation de la dynamique transversale d'un véhicule, avec direction sur les roues avant, la régulation s'effectuant en fonction d'écarts entre des valeurs réelles mesurées de la vitesse de lacet et des valeurs de consigne, générées en continu, de celle-ci et la poursuite des valeurs réelles s'effectuant par réglage d'angles de braquage des roues ($\delta_i$) et/ou du réglage des efforts de freinage sur les roues ($P_i$), où à l'aide d'un modèle linéaire du véhicule, représentant un comportement dynamique souhaité, on détermine, pour la vitesse de lacet $\dot{\psi}$, une première valeur de consigne $\dot{\psi}_{consigne}(\delta, v_x)$ qui correspond au souhait du conducteur, manifesté par une commande faite par actionnement d'un organe de commande au sujet du déplacement sur trajectoire du véhicule, **caractérisé en ce que**, dans les conditions annexes, selon lesquelles l'angle d'attitude $\beta_h$ dans la zone des roues arrière non directionnelles du véhicule, et/ou l'angle de dérive $\alpha_4$ se produisant sur les roues arrière non directionnelles du véhicule, ne doit pas dépasser une valeur limite, une autre valeur de consigne $\dot{\psi}_{consigne}(\beta)$ est déterminée, et **en ce qu'**on utilise, comme valeur de consigne déterminante pour la régulation de la vitesse de lacet, celle de ces deux valeurs de consignne qui est la plus petite.

2. Procédé selon la revendication 1, **caractérisé en ce que** l'autre valeur de consigne $\dot{\psi}_{consigne}(\beta)$ est formée selon la relation :

$$\dot{\psi}_{consigne}(\beta) = \frac{K.a_{ysh}}{v_x}, - \lambda.(\beta_{sh} - \beta_{sh\,max}),$$

dans laquelle on désigne par $\beta_{sh}$ l'angle d'attitude en un point situé dans une zone arrière du véhicule, à une distance significative du centre de gravité, on désigne par $a_{ysh}$ l'accélération transversale à ce point, on désigne par K une constante spécifique au véhicule, et on désigne par $\lambda$ un facteur d'amplification sélectionnable.

3. Procédé selon la revendication 2, **caractérisé en ce que** pour le cas dans lequel le moment d'inertie en giration $J_z$ est donné au moins en bonne approximation par la relation

$$J_z = l_h \cdot l_v \cdot m \,,$$

dans laquelle on désigne par m la masse du véhicule, par $l_v$ l'espacement entre le centre de gravité du véhicule et l'essieu avant, et par $l_h$ l'espacement entre le centre de gravité et l'essieu arrière, l'autre valeur de consigne, nécessaire pour la régulation de la limitation de la vitesse de lacet, est déterminée selon la relation

$$\dot{\psi}_{consigne}(\alpha_h) = \frac{L.S_h(a_h)}{l_v.v_{x.}m} - \lambda.(\alpha_h - \alpha_h\,max)$$

dans laquelle on désigne par L l'empattement du véhicule et par $S_h(\alpha_h)$ la force latérale se produisant, en roulage en courbe, sur l'essieu arrière du véhicule.

4. Procédé selon l'une des revendications 1 à 3, **caractérisé en ce que** la valeur limite d'angle d'attitude $\beta_{hmax}$, respectivement la valeur limite d'angle de dérive $\alpha_{hmax}$ sont prédéterminées et fixes, de préférence sont d'une valeur de 10°.

5. Procédé selon l'une des revendications 1 à 4, **caractérisé en ce que** la valeur limite d'angle d'attitude $\beta_{hmax}$ et/ou la valeur limite d'angle de dérive $\alpha_{hmax}$ est/sont déterminée(s) en prenant en considération des valeurs estimées $\dot{v}_x$ ainsi que $\dot{\mu}$ de la vitesse longitudinale du véhicule $v_x$ et du coefficient d'adhérence pneu-route $\mu$.

6. Procédé selon l'une des revendications 1 à 3, **caractérisé en ce que** la valeur réelle de l'angle d'attitude $\beta_h$ est

déterminée à partir de valeurs estimées $\hat{v}_y, \hat{v}_x$ de la vitesse transversale de véhicule ($v_y$) et de la vitesse longitudinale du véhicule ($v_x$).

Fig. 1

Fig. 2

Fig. 3